# EUROPEAN PATENT APPLICATION

(11) **EP 3 174 310 A1**
(43) Date of publication of application: **31.05.2017**
(21) Application number: 15825262.7
(22) Date of filing: 26.05.2015
(51) Int. Cl.: H04R 1/20

(54) **TELEVISION WITH BUILT-IN DUAL MEMBRANE RESONANCE SOUND BOX**

(30) Priority: 22.07.2014 CN 201410350202
(71) Applicant: Shen Zhen Neusound Co. Ltd., Shenzhen, Guangdong 518132 (CN)
(72) Inventor: ZHENG, Quanlu, Shenzhen Guangdong 518132 (CN)
(74) Representative: Bailey, Sam Rogerson
(86) International application number: PCT/CN2015/079749
(87) International publication number: WO 2016/011844

(57) **Abstract**

The present invention relates to the field of televisions, and particularly to a television with a built-in dual opposite passive radiators sound box. Left and right sides in the television are provided symmetrically with independent sound boxes. Each sound box comprises a box body and a loudspeaker group, a front passive radiator and a rear passive radiator that are located in the box body. The front passive radiator is installed on the front box wall of the box body. The loudspeaker group installed on the front box wall is disposed on one side or left and right sides of the front passive radiator. The rear passive radiator is installed on the rear box wall, opposite to the front box wall, of the box body, and the rear passive radiator corresponds to the front passive radiator. According to the present invention, the bass vibrating membrane area is exponentially increased through dual membrane symmetric resonance; and through the resonance, the bass effects are dramatically enhanced, the perfect reproduction of the whole tone frequency domain is achieved, the difficult problem of increasingly bad sound effects as a flat-panel television becomes thinner is solved, and the flat-panel television can have the advantages of both good image and sound.

## Description

### Technical Field

The present invention relates to the field of televisions, and particularly to a television with built-in dual opposite passive radiators sound box(es).

### Background

It is well-known that with the rapid development of the television technology, especially the flat-panel television technology, people have higher and higher requirements for televisions; moreover, good image and good sound are the most important two aspects for the quality of televisions. The images are increasingly good as a current flat-panel television becomes thinner, but the sound effects are increasingly bad as the flat-panel television becomes thinner, because loudspeakers and sound boxes are limited in size after the television becomes thinner, and only small loudspeakers and small sound boxes can be used, thereby causing poor tone quality of bass. In the Loudspeaker and Sound Box Design Handbook published by Fujian Science & Technology Publishing House in July, 2008, closed sound box (page 60-67), opening sound box (page 67-77), and passive radiator sound box (page 77-78) are disclosed. When these disclosed prior arts are used in the flat-panel television, since the flat-panel television is thin and the loudspeakers are small in size, the television using the above-mentioned prior arts is poor in tone quality, especially bass, which cannot be replayed nearly. Although increasing the loudspeakers in size and increasing the sound boxes in size can meet sound requirements, it is difficult to install large-size loudspeakers and large-size sound boxes on the flat-panel television. This becomes a difficult problem of the current flat-panel television.

### Summary

To solve the problem of poor tamber quality of the existing television, the present invention aims to provide a television with built-in dual opposite passive radiators sound box. The television is provided with two bilaterally symmetrical identical sound boxes, and two opposite passive radiators and corresponding loudspeaker groups are disposed in each of the sound boxes. In this way, sound boxes with small volume and light weight can be manufactured using small-size loudspeakers (for example, loudspeakers with the diameter of 53mm), so that the sound boxes not only can be conveniently installed on the flat-panel television, but also can make vigorous and amazing bass, loud and clear mediant and treble, thereby achieving the purpose of making the flat-panel television have the advantages of both good image and sound.

The purpose of the present invention is realized by the following technical solution:
Left and right sides in the television of the present invention are provided symmetrically with independent sound boxes. Each sound box comprises a box body and a loudspeaker group, a front passive radiator and a rear passive radiator that are located in the box body, wherein the front passive radiator is installed on a front box wall of the box body, the loudspeaker group installed on the front box wall is disposed on one side or left and right sides of the front passive radiator, the rear passive radiator is installed on a rear box wall, opposite to the front box wall, of the box body, and the rear passive radiator corresponds to the front passive radiator.

Wherein the front passive radiator is located on one side of the front box wall, and the loudspeaker group installed on the other side of the front box wall is disposed on one side of the front passive radiator; a vibrating membrane of the loudspeaker group is disposed outwards towards the box body, and the front box wall is parallel to the rear box wall on which the rear passive radiator is installed;
the front passive radiator is located on one side of the front box wall, and the loudspeaker group installed on the other side of the front box wall is disposed on one side of the front passive radiator; the front box wall on which the front passive radiator is installed, is partially depressed inwards towards the box body, to form a front inner box wall, and a front side box wall is located between the front inner box wall and the front box wall; the vibrating membrane of the loudspeaker group is disposed outwards towards the box body, and the front inner box wall on which the front passive radiator is located, is parallel to or oblique to the front box wall on which the loudspeaker group is located; the rear box wall is parallel to the front inner box wall; the rear box wall on which the rear passive radiator is installed, is partially depressed inwards towards the box body, to form a rear inner box wall, and a rear side box wall is located between the rear inner box wall and the rear box wall; the vibrating membrane of the loudspeaker group is disposed outwards towards the box body, the front inner box wall on which the front passive radiator is located, is parallel to the rear inner box wall on which the rear passive radiator is located, and the front inner box wall and the rear inner box wall correspond to each other and are identical in both shape and size; and the front inner box wall is parallel to or oblique to the front box wall on which the loudspeaker group is located, and the rear inner box wall is parallel to or oblique to the rear box wall;
the front passive radiator is installed in the middle position of the front box wall, and left and right sides of the front passive radiator are provided symmetrically with loudspeaker groups, i.e. a left loudspeaker group and a right loudspeaker group; the vibrating membranes of the left loudspeaker group and the right loudspeaker group are both disposed outwards towards the box bodies, and the front box wall is parallel to the rear box wall on which the rear passive radiator is installed;
the front passive radiator is installed in the middle position of the front box wall, and left and right sides of the front passive radiator are provided symmetrically with loudspeaker groups, i.e. a left loudspeaker group and a right loudspeaker group; the front box wall on which the front passive radiator is installed, is partially depressed inwards towards the box body, to form a front inner box wall, the left loudspeaker group and the right loudspeaker group are respectively installed on a left front box wall and a right front box wall on left and right sides of the front inner box wall, a left inner side box wall is located between the left side of the front inner box wall and the left front box wall, and a right inner side box wall is located between the right side of the front inner box wall and the right front box wall; the left front box wall and the right front box wall are identical in shape and size, and disposed symmetrically about the centerline in the width direction of the box body, and parallel to the front inner box wall or respectively oblique to the front inner box wall; the rear passive radiator is located in the middle position of the whole rear box wall, the rear box wall is parallel to the front inner box wall, and the left front box wall and the right front box wall are parallel to the rear box wall or respectively oblique to the rear box wall; the horizontal cross section of the sound box is in a "concave" shape; the rear box wall on which the rear passive radiator is installed, is partially depressed inwards towards the box body, to form a rear inner box wall, and rear outer box walls are located between left and right sides of the rear inner box wall; a left inner rear box wall is located between the left side of the rear inner box wall and the left rear outer box wall, and a right inner rear box wall is located between the right side of the rear inner box wall and the right rear outer box wall; the rear outer box walls on both sides of the rear inner box wall are disposed symmetrically about the centerline in the width direction of the box body, and are parallel to the rear inner box wall or oblique to the rear inner box wall; the rear inner box wall and the front inner box wall are parallel and correspond to each other and are identical in shape and size; the rear outer box wall on the left side of the rear inner box wall corresponds to the left front box wall, and the rear outer box wall on the right side of the rear inner box wall corresponds to the right front box wall;
the sound boxes on left and right sides in the television are both in electroacoustic in-phase connection, the sound box located on the left side in the television is connected to a left channel of the television, and the sound box located on the right side in the television is connected to a right channel of the television; the front passive radiator and the rear passive radiator are completely identical passive radiators and the front passive radiator and the rear passive radiator are opposite installed, the vibrating membrane plane of the front passive radiator is parallel to that of the rear passive radiator, and the distance between the vibrating membrane plane of the front passive radiator and that of the rear passive radiator is less than the diameter of each single loudspeaker unit of the loudspeaker group; and all vibrating membranes of each of the loudspeaker units of the loudspeaker group are installed outwards towards the box body, and all loudspeaker units are in electroacoustic in-phase connection when the loudspeaker group is composed of a plurality of loudspeaker units.

The present invention has the advantages and positive effects that:
1. In the present invention, two bilaterally symmetrical identical sound boxes are used, and two opposite passive radiators and corresponding loudspeaker groups are disposed in each of the sound boxes. In this way, sound boxes with small volume and light weight which can match the flat-panel television can be manufactured using small-size loudspeakers, so that the sound boxes not only can be conveniently installed on the flat-panel television, but also can make vigorous and amazing bass, loud and clear mediant and treble, thereby achieving the purpose of making the flat-panel television have the advantages of both good image and sound.
2. According to the sound boxes of the television the present invention, through dual (front and rear passive radiators) passive_radiators, the bass vibrating membrane area is exponentially increased and sound airflow resonance is generated, and through the double resonances, the bass effects are dramatically enhanced, so that the same low- frequency sound can be made by small-size loudspeakers (for example, 2 inch) as by large-size loudspeakers (for example, 5-6.5 inch) and corresponding large-size sound boxes.
3. The sound coils of the vibrating membranes of the loudspeaker units (such as 2 inch) of the sound boxes of the television of the present invention are all small in size and light in mass, and the vibrating membranes are installed outwards, so that medium-frequency and high-frequency sound waves in the audio are directly radiated into the atmospheric space, thereby obtaining high-quality medium-frequency and high-frequency playing quality.
4. The sound boxes of the television of the present invention are scientifically, reasonably and simply designed in physical acoustics, are convenient to manufacture, have low costs, and are practical.
5. According to the present invention, the problem of increasingly bad sound effects as a flat-panel television becomes thinner is solved.

### BRIEF DESCRIPTION OF THE DRAWINGS

Fig. 1 is a front view of a structure of the present invention;
Fig. 2 is a bottom view of Fig. 1;
Fig. 3 is a schematic diagram of a stereographic structure of the present invention;
Fig. 4A is a front view of a structure of a dual opposite passive radiators sound box in embodiment 1 of the present invention;
Fig. 4B is a top section view of Fig. 4A;
Fig. 5A is a front view of a structure of a dual opposite passive radiators sound box in embodiment 2 of the present invention;
Fig.5B is a top section view of Fig. 5A;
Fig. 6A is a front view of a structure of a dual opposite passive radiators sound box in embodiment 3 of the present invention;
Fig.6B is a top section view of Fig. 6A;
Fig. 7A is a front view of a structure of a dual opposite passive radiators sound box in embodiment 4 of the present invention;
Fig.7B is a top section view of Fig. 7A;
Fig. 8A is a front view of a structure of a dual opposite passive radiators sound box in embodiment 5 of the present invention;
Fig.8B is a top section view of Fig. 8A;
Fig. 9A is a front view of a structure of a dual opposite passive radiators sound box in embodiment 6 of the present invention; and
Fig.9B is a top section view of Fig. 9A.

Legends: 1. television; 2. left sound box; 3. right sound box; 4. box body; 5. loudspeaker group; 6. front box wall; 7. rear box wall; 8. front passive radiator; 9. rear passive radiator; 10. front inner box wall; 11. front side box wall; 12. rear inner box wall; 13. rear side box wall; 14. left loudspeaker group; 15. right loudspeaker group; 16. left inner side box wall; 17. right inner side box wall; 18. left front box wall; 19. right front box wall; 20. left inner rear box wall; 21. right inner rear box wall; 22. rear outer box wall.

### Detailed Description

The present invention is further detailed below in combination with the drawings.

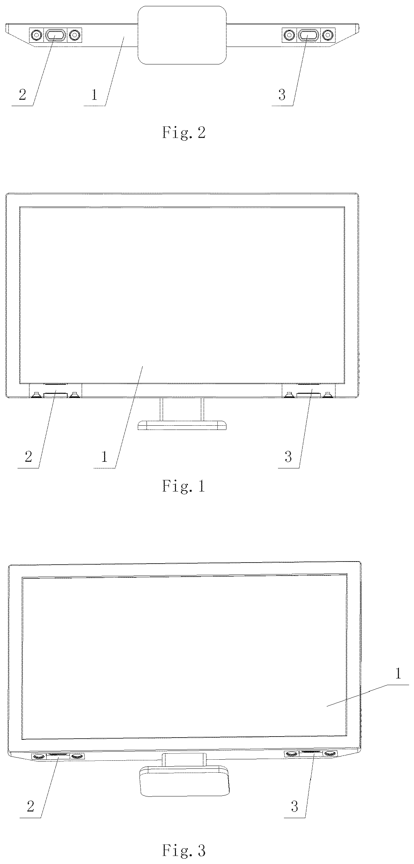

The television 1 of the present invention may be a flat-panel television in the prior art. As shown in Figs. 1-3, left and right sides in the television 1 are provided symmetrically with independent sound boxes, i.e. a left sound box 2 and a right sound box 3, and each sound box comprises a box body 4 and a loudspeaker group, a front passive radiator 8 and a rear passive radiator 9 that are located in the box body 4, wherein the box body 4 is an airtight box body with a single cavity body, the front passive radiator 8 is installed on a front box wall 6 of the box body 4, the loudspeaker group installed on the front box wall 6 is disposed on one side or left and right sides of the front passive radiator 8, the rear passive radiator 9 is installed on a rear box wall 7, opposite to the front box wall 6, of the box body 4, and the rear passive radiator 9 corresponds to the front passive radiator 8.

### Embodiment 1

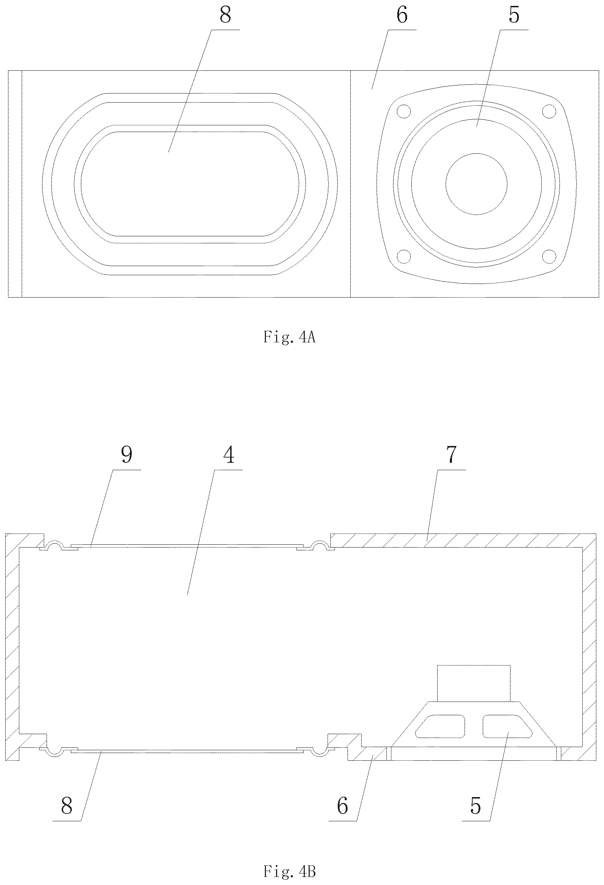

As shown in Fig. 4A and Fig. 4B, the left sound box 2 and the right sound box 3 in this embodiment are two identical sound boxes, and the two sound boxes are manufactured first. The loudspeaker group 5, the front passive radiator 8 and the rear passive radiator 9 are installed in the box body 4, wherein the box body 4 is an airtight box body, can be manufactured using a die opening and injection molding method, and can be manufactured using other material such as metal material (for example, aluminum, iron), wood or plastics as well. The box body 4 in this embodiment is manufactured using the plastic injection method and modeling. The appearance is designed first, and then, the box body model is opened in accordance with the designed appearance and then is manufactured using an injection molding machine. The box body 4 in this embodiment has the outside size of: 130mm (length) x 36mm (width) x 59mm (height).

The box body 4 has a front box wall 6, a rear box wall 7, left and right box walls, and upper and lower box walls, wherein the front passive radiator 8 is installed on one side of front box wall 6, the loudspeaker group 5 installed on the other side of the front box wall 6 is disposed on one side of the front passive radiator 8, and the vibrating membrane of each loudspeaker unit of the loudspeaker group 5 is installed outwards. The rear passive radiator 9 is installed on the rear box wall 7, the front box wall 6 and the rear box wall 7 are parallel to each other, and the front passive radiator 8 and the rear passive radiator 9 are equal in height and are installed symmetrically. The front passive radiator 8 and the rear passive radiator 9 are completely identical passive radiators, i.e. the front passive radiator 8 and the rear passive radiator 9 are identical in manufacturing material, size, shape and the like; the so-called passive radiators are also called air loudspeakers and only have vibrating membranes, called membranes for short, and the vibrating membrane area of any one passive radiator is equal to or greater than the total vibrating membrane area of all loudspeaker units of the loudspeaker group 5. The vibrating membrane area of each passive radiator in this embodiment is 3500mm². The front passive radiator 8 and the rear passive radiator 9 can be elliptic in shape, and can be round or square in shape as well; and can be flat-panel in structure, and can be conical in structure; and the passive radiators used in this embodiment are elliptic flat-panel passive radiators, so that attention should be paid to the sealing between the passive radiators and the box bodies 4 during installation.

The front passive radiator 8 and the rear passive radiator 9 are symmetrically installed oppositely, the vibrating membrane plane of the front passive radiator 8 is parallel to that of the rear passive radiator 9, the distance between the vibrating membrane plane of the front passive radiator 8 and that of the rear passive radiator 9 is less than the diameter of each single loudspeaker unit of the loudspeaker group 5, and the distance may be 25-50mm, preferably 30mm in this embodiment.

The loudspeaker group 5 is composed of one to four loudspeaker units, these loudspeaker units are all whole-frequency type loudspeakers, and all the loudspeaker units are identical loudspeakers when the loudspeaker group is composed of a plurality of loudspeaker units; each loudspeaker unit has a diameter of 36-66mm in size, and the loudspeaker group 5 in this embodiment is composed of one whole-frequency loudspeaker unit, which has a diameter of 53mm in size (loudspeaker of 2 inch); and when the loudspeaker group 5 is composed of a plurality of loudspeaker units, all the loudspeaker units are in electroacoustic in-phase connection, can be connected in series, can also be connected in parallel, and can be connected in series-parallel as well.

After the identical left sound box 2 and right sound box 3 are completely manufactured, the left sound box 2 and the right sound box 3 are symmetrically installed on the television 1 respectively, and form a complete whole together with a front frame and a rear cover of the television 1. The left sound box 2 and the right sound box 3 are in electroacoustic in-phase connection, i.e. the positive (+) electrode of the left sound box 2 is connected to the positive (+) electrode of the audio output of the left (L) channel of the television 1, and the negative (-) electrode thereof is connected to the negative (-) electrode of the audio output; and the positive (+) electrode of the right sound box 3 is connected to the positive (+) electrode of the audio output of the right (R) channel of the television 1, and the negative (-) electrode thereof is connected to the negative (-) electrode of the audio output.

The left sound box 2 and the right sound box 3 are identical in installation orientation, and the so-called installation orientation refers to the orientation of each of the vibrating membranes of the loudspeaker groups 5 of the left sound box 2 and the right sound box 3.

The left sound box 2 and the right sound box 3 can be installed on the lower part of the television 1, then, the left sound box 2 and the right sound box 3 can be oriented downwards and can be oriented forwards or backwards as well; the left sound box 2 and the right sound box 3 can be installed on the upper part of the television 1, then, the left sound box 2 and the right sound box 3 can be oriented upwards, forwards or backwards; and the left sound box 2 and the right sound box 3 can also be installed on the middle part of the left side or the middle part of the right side of the television 1, then, the left sound box 2 and the right sound box 3 can be oriented forwards, backwards or leftwards or rightwards. The left sound box 2 and the right sound box 3 in this embodiment are installed on the lower part of the television 1, and the left sound box 2 and the right sound box 3 are both oriented downwards. It also should be noted at this time that the left sound box 2 and the right sound box 3 should be symmetrically installed, i.e. the end of the loudspeaker group 5 of the left sound box 2 is on the left outer side of the television 1, and the end of the loudspeaker group 5 of the right sound box 3 is on the right outer side of the television 1.

### Embodiment 2

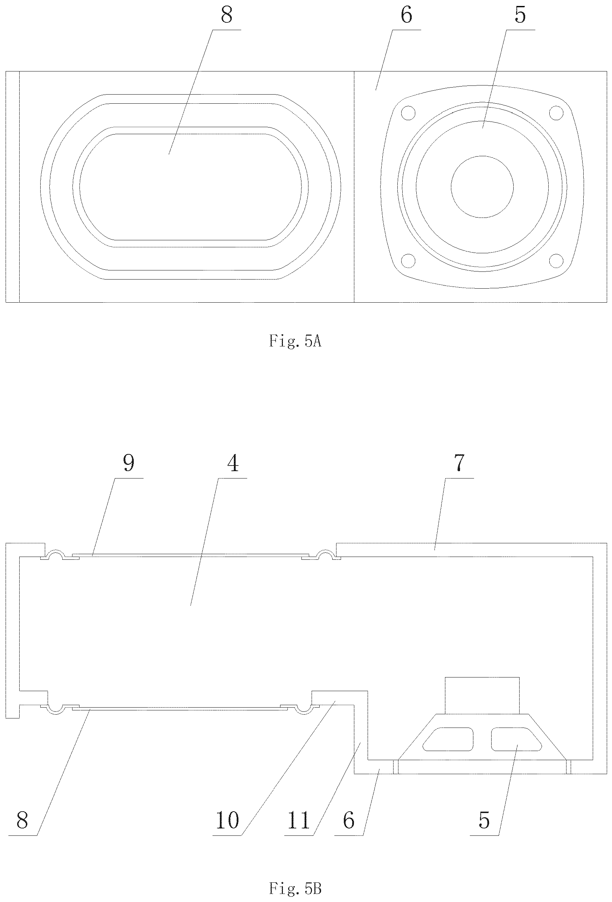

As shown in Fig. 5A and Fig. 5B, this embodiment is different from embodiment 1 in that:
the front box wall 6 on which the front passive radiator 8 is installed is partially depressed inwards towards the box body 4, to form a front inner box wall 10, and a front side box wall 11 is located between the front inner box wall 10 and the front box wall 6. The vibrating membrane of the loudspeaker group 5 is disposed outwards towards the box body 4, the front inner box wall 10 on which the front passive radiator 8 is located is parallel to or oblique to the front box wall 6 on which the loudspeaker group 5 is located (the front inner box wall 10 in this embodiment is parallel to the front box wall 6), and the rear box wall 7 is parallel to the front inner box wall 10. The front side box wall 11 in this embodiment is parallel to the left and right box walls, and is perpendicular to the front box wall 6, the rear box wall 7 and the front inner box wall 10.

### Embodiment 3

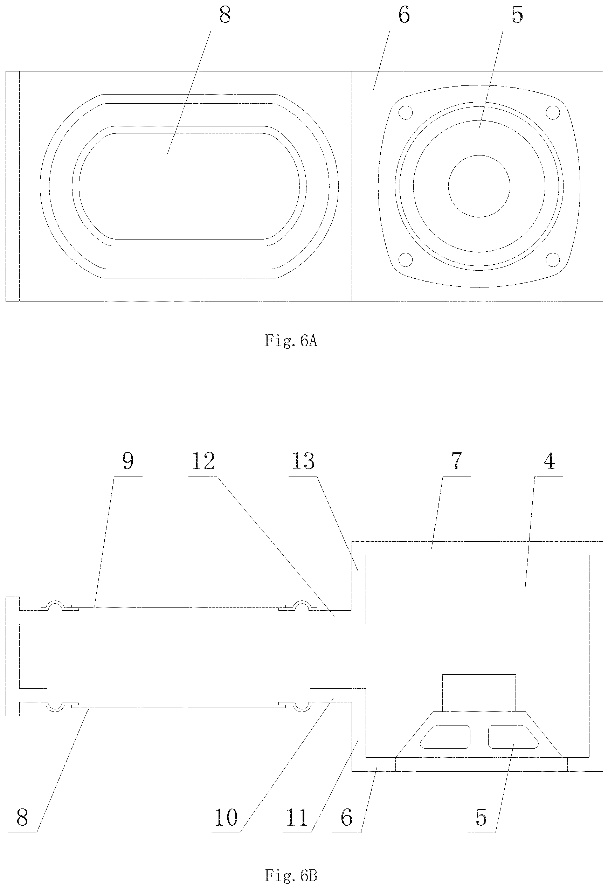

As shown in Fig. 6A and Fig. 6B, this embodiment is different from embodiment 2 in that:
the rear box wall 7 on which the rear passive radiator 9 is installed is partially depressed inwards towards the box body 4, to form a rear inner box wall 12, and a rear side box wall 13 is located between the rear inner box wall 12 and the rear box wall 7. The vibrating membrane of the loudspeaker group 5 is disposed outwards towards the box body 4, the front inner box wall 10 on which the front passive radiator 8 is located is parallel to the rear inner box wall 12 on which the rear passive radiator 9 is located, and the front inner box wall 10 and the rear inner box wall 12 correspond to each other and are identical in both shape and size; and the front inner box wall 10 is parallel to or oblique to the front box wall 6 on which the loudspeaker group 5 is located (the front inner box wall 10 in this embodiment is parallel to the front box wall 6), and the rear inner box wall 12 is parallel to or oblique to the rear box wall 7 (the rear inner box wall 12 in this embodiment is parallel to the rear box wall 7). The front box wall 6 in this embodiment is parallel to the rear box wall 7, and the front side box wall 11 and the rear side box wall 13 are coplanar, are parallel to the left and right box walls, and are perpendicular to the front box wall 6, the rear box wall 7, the front inner box wall 10 and the rear inner box wall 12.

### Embodiment 4

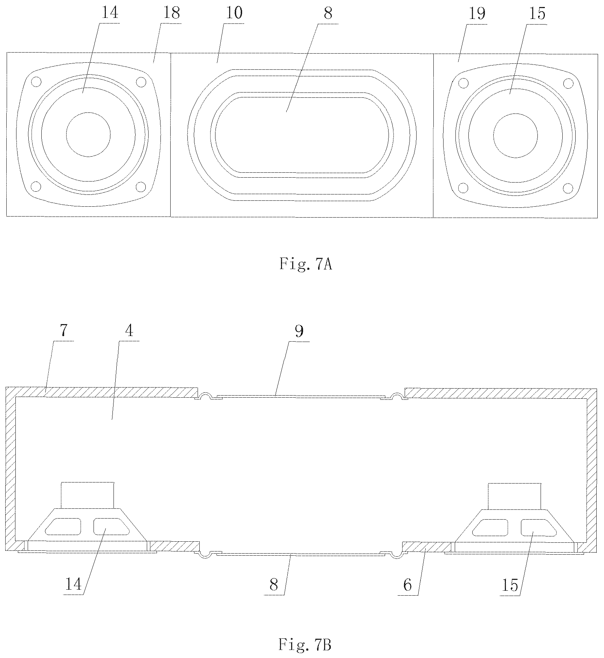

Two loudspeaker groups, i.e. a left loudspeaker group 14 and a right loudspeaker group 15, are respectively installed in the box bodies 4 of the left sound box 2 and the right sound box 3 in this embodiment, the left loudspeaker group 14 and the right loudspeaker group 15 are symmetrically installed on left and right sides of the front box wall 6, and the front passive radiator 8 is installed in the middle position of the front box wall 6, i.e. the middle position between the left loudspeaker group 14 and the right loudspeaker group 15; the rear passive radiator 9 is installed on the rear box wall 7, the rear box wall 7 and the front box wall 6 are parallel to each other, and the front passive radiator 8 and the rear passive radiator 9 are identical in height and are installed symmetrically; and the vibrating membrane plane of the front passive radiator 8 is parallel to that of the rear passive radiator 9, the distance between the vibrating membrane plane of the front passive radiator 8 and that of the rear passive radiator 9 is less than the diameter of each single loudspeaker unit of the left loudspeaker group 14 and the right loudspeaker group 15, and the distance may be 25-50mm, preferably 30mm in this embodiment. The installation plane of each of the left loudspeaker group 14 and the right loudspeaker group 15 and that of the front passive radiator 8 can be coplanar, and the installation plane of each of the left loudspeaker group 14 and the right loudspeaker group 15 can protrude above that of the front passive radiator 8. In this embodiment, the installation plane of each of the left loudspeaker group 14 and the right loudspeaker group 15 and that of the front passive radiator 8 are coplanar. That is:
as shown in Fig. 7A and Fig. 7B, both the front passive radiator 8 and the left loudspeaker group 14 and the right loudspeaker group 15 located on the left and right sides thereof are installed on the front box wall 6, and the rear box wall 7 on which the rear passive radiator 9 is installed is parallel to the front box wall 6, i.e. the horizontal cross section of the sound box is rectangular in shape. The left loudspeaker group 14 and the right loudspeaker group 15 are identical in installation plane shape and size and are symmetrically disposed on left and right sides of the front passive radiator 8, and the left loudspeaker group 14 and the right loudspeaker group 15 are equal in height. The rear passive radiator 9 is installed in the middle position of the whole rear box wall 7. The front passive radiator 8 and the rear passive radiator 9 are symmetrically installed oppositely, the vibrating membrane plane of the front passive radiator 8 is parallel to that of the rear passive radiator 9, the distance between the vibrating membrane plane of the front passive radiator 8 and that of the rear passive radiator 9 is less than the diameter of each single loudspeaker unit of the left loudspeaker group 14 and the right loudspeaker group 15, and the distance may be 25-50mm, preferably 30mm in this embodiment.

The left loudspeaker group 14 and right loudspeaker group 15 are completely identical loudspeaker groups, each loudspeaker group is composed of one to four loudspeaker units, these loudspeaker units are all whole-frequency type loudspeakers, and all the loudspeaker units are identical loudspeakers when the loudspeaker group is composed of a plurality of loudspeaker units; each loudspeaker unit has a diameter of 36-66mm in size, and each of the left loudspeaker group 14 and the right loudspeaker group 15 in this embodiment is composed of one whole-frequency loudspeaker unit, which has a diameter of 53mm in size (loudspeaker of 2 inch); and when the loudspeaker group 5 is composed of a plurality of loudspeaker units, all the loudspeaker unit are in electroacoustic in-phase connection, can be connected in series, can also be connected in parallel, and can be connected in series-parallel as well.

After the identical left sound box 2 and the right sound box 3 are completely manufactured, the left sound box 2 and the right sound box 3 are symmetrically installed on the television 1 respectively, and form a complete whole together with a front frame and a rear cover of the television 1. The left sound box 2 and the right sound box 3 are in electroacoustic in-phase connection, i.e. the positive (+) electrode of the left sound box 2 is connected to the positive (+) electrode of the audio output of the left (L) channel of the television 1, and the negative (-) electrode thereof is connected to the negative (-) electrode of the audio output; and the positive (+) electrode of the right sound box 3 is connected to the positive (+) electrode of the audio output of the right (R) channel of the television 1, and the negative (-) electrode thereof is connected to the negative (-) electrode of the audio output.

The left sound box 2 and the right sound box 3 are identical in installation orientation, and the so-called installation orientation refers to the orientation of each of the vibrating membranes of the left loudspeaker group 14 and the right loudspeaker group 15 of the left sound box 2 and the right sound box 3.

The left sound box 2 and the right sound box 3 can be installed on the lower part of the television 1, then, the left sound box 2 and the right sound box 3 can be oriented downwards and can be oriented forwards or backwards as well; the left sound box 2 and the right sound box 3 can be installed on the upper part of the television 1, then, the left sound box 2 and the right sound box 3 can be oriented upwards, forwards or backwards; and the left sound box 2 and the right sound box 3 can also be installed on the middle part of the left side or the middle part of the right side of the television 1, then, the left sound box 2 and the right sound box 3 can be oriented forwards, backwards or leftwards or rightwards. The left sound box 2 and the right sound box 3 in this embodiment are installed on the lower part of the television 1, and the left sound box 2 and the right sound box 3 are both oriented downwards.

### Embodiment 5

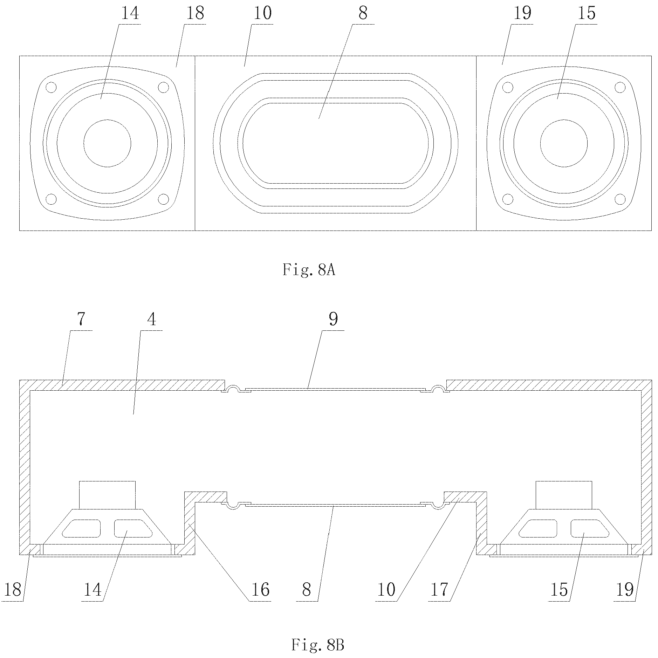

As shown in Fig. 8A and Fig. 8B, this embodiment is different from embodiment 4 in that:
the front box wall 6 on which the front passive radiator 8 is installed is partially depressed inwards towards the box body 4, to form a front inner box wall 10, a left front box wall 18 and a right front box wall 19 are respectively located on left and right sides of the front inner box wall 10, the left front box wall 18 and the right front box wall 19 are symmetrically disposed about the centerline in the width direction of the box body 4, and the left loudspeaker group 14 and the right loudspeaker group 15 are symmetrically disposed and are respectively installed on the left front box wall 18 and the right front box wall 19 on the left and right sides of the front inner box wall 10. A left inner box wall 16 is located between the left side of the front inner box wall 10 and the left front box wall 18, and a right inner side box wall 17 is located between the right side thereof and the right front box wall 19. The left front box wall 18 and the right front box wall 19 are parallel to the front inner box wall 10 or respectively oblique to the front inner box wall 10. The left front box wall 18 and the right front box wall 19 in this embodiment are coplanar, are parallel to the front inner box wall 10, and are parallel to the rear box wall 7 of the box body 4, i.e. the horizontal cross section of the sound box is in a "concave" shape. The left front box wall 18 and the right front box wall 19 are identical in shape and size and are symmetrically disposed on the left and right sides of the front inner box wall 10, and the left loudspeaker group 14 and the right loudspeaker group 15 are equal in height on the left front box wall 18 and the right front box wall 19; and the front inner box wall 10 is located in the middle position of the whole front box wall 6, and accordingly, the rear passive radiator 9 is installed in the middle position of the whole rear box wall 7. The front passive radiator 8 and the rear passive radiator 9 are symmetrically installed oppositely, the vibrating membrane plane of the front passive radiator 8 is parallel to that of the rear passive radiator 9, the distance between the vibrating membrane plane of the front passive radiator 8 and that of the rear passive radiator 9 is less than the diameter of each single loudspeaker unit of the left loudspeaker group 14 and the right loudspeaker group 15, and the distance may be 25-50mm, preferably 30mm in this embodiment.

### Embodiment 6

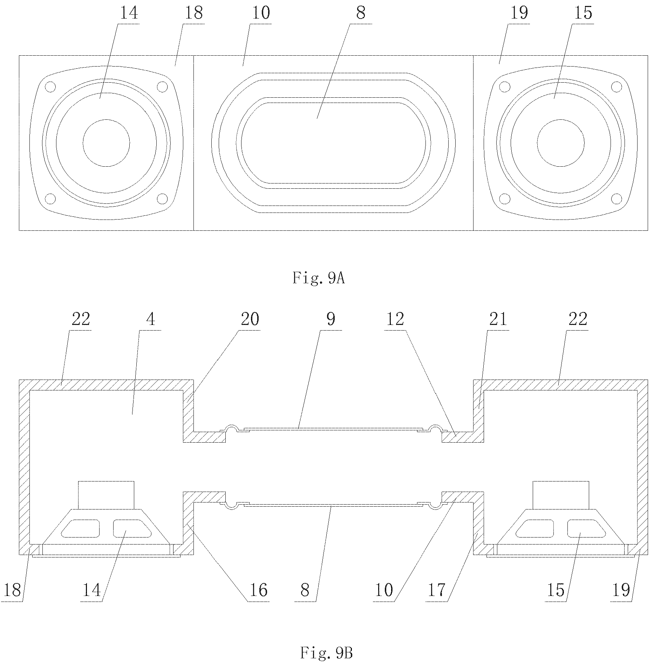

As shown in Fig. 9A and Fig. 9B, this embodiment is different from embodiment 5 in that:
the rear box wall 7 on which the rear passive radiator 9 is installed is partially depressed inwards towards the box body 4, to form a rear inner box wall 12, and rear outer box walls 22 are located on left and right sides of the rear inner box wall 12 (the rear inner box wall and the rear outer box wall in embodiments 4 and 5 are coplanar, thereby forming the rear box wall 7).

The rear outer box walls 22 on the two sides of the rear inner box wall 12 are coplanar and are parallel to the rear inner box wall 12, alternatively, the rear outer box walls 22 on the two sides of the rear inner box wall 12 are symmetrically disposed about the centerline in the width direction of the box body 4 and are respectively oblique to the rear inner box wall 12. The rear outer box walls 22 on the two sides of the rear inner box wall in this embodiment are coplanar, are parallel to the rear inner box wall 12, and are parallel to the front inner box wall 10, the left front box wall 18 and the right front box wall 19. A left inner rear box wall 20 is located between the left side of the rear inner box wall 12 and the left rear outer box wall 22, and a right inner rear box wall 21 is located between the right side of the rear inner box wall 12 and the right rear outer box wall 22; the rear inner box wall 12 and the front inner box wall 10 are parallel and correspond to each other and are identical in shape and size; and the rear outer box wall 22 on the left side of the rear inner box wall 12 corresponds to the left front box wall 18, and the rear outer box wall 22 on the right side of the rear inner box wall 12 corresponds to the right front box wall 19.

The left sound box 2 and the right sound box 3 symmetrically provided on left and right sides in the television 1 of the present invention can also be that the loudspeaker groups 5 are located in the sound box on one side, and the left loudspeaker group 14 and the right loudspeaker group 15 are located in the sound box on the other side.

The present invention has the operating principle that:
When the television 1 operates, the sound of the L (left) channel of the audio power output generated thereby is applied to the left sound box 2, and the sound of the R (right) channel is applied to the right sound box 3. At this time, the vibrating membranes of the loudspeaker groups 5, or the left loudspeaker group 14 and the right loudspeaker group 15 vibrate, to achieve electroacoustic conversion to produce sounds. The low-frequency sound airflows in the sound waves drive the front passive radiator 8 and the rear passive radiator 9 to vibrate, and the two passive radiators are opposite in vibrating direction and identical in amplitude, i.e. the two passive radiators vibrate outwards simultaneously or inwards simultaneously in the same amplitude, to produce resonance. In this way, not only the vibrating membrane area is exponentially increased (an active vibrating membrane and two passive vibrating membranes of the loudspeaker), and at the same time, through the resonance, the low-frequency sound waves are dramatically enhanced, so that the bass effects are dramatically enhanced by the result of the double resonances; and moreover, the loudspeaker size of the loudspeaker group is very small (about 2 inch). In this way, the vibrating membrane is light in mass, the sound coil is light in weight, the produced sounds at medium frequency and high frequency are good, and all the vibrating membranes of the loudspeakers face the atmospheric space, so that the medium-frequency and high-frequency sound waves are directly radiated into the ambient atmosphere. Thus, not only well-rounded, deep and amazing bass can be obtained, but also loud and clear alto and treble can be obtained, and a satisfying sound playing effect can be obtained at the whole tone frequency, so that the sound playing quality of the flat-panel television is dramatically improved, and the difficult problem of increasingly bad sound effects as a flat-panel television becomes thinner is successfully solved. Thus, the flat-panel television can have the advantages of both good image and sound.

In the television with built-in dual opposite passive radiators sound box(es) of the present invention, two sound boxes are used, and each sound box is manufactured using small-bore whole-frequency loudspeakers and is provided symmetrically with two identical passive radiators, under the drive of the audio power output by the television, the loudspeaker groups of the two sound boxes achieve electroacoustic conversion to produce sounds, the medium-frequency and high-frequency sound waves are directly radiated into the space, and low-frequency sound airflows drive the two passive low-frequency radiators to symmetrically vibrate, to produce strong low-frequency sound waves and radiate same into the atmospheric space; the cost is not high, but the bass effects are dramatically enhanced through dual membrane passive resonance, so that the television manufactured using small-bore loudspeakers can also make an amazing sound, thereby solving the problem of poor tone quality of the sound of the flat-panel television.

## Claims

1. A television with built-in dual opposite passive radiators sound box, **characterized in that** left and right sides in said television (1) are provided symmetrically with independent sound boxes, and each sound box comprises a box body (4) and a loudspeaker group, a front passive radiator (8) and a rear passive radiator (9) that are located in said box body (4), wherein the front passive radiator (8) is installed on a front box wall (6) of said box body (4), the loudspeaker group installed on the front box wall (6) is disposed on one side or left and right sides of the front passive radiator (8), the rear passive radiator (9) is installed on a rear box wall (7), opposite to said front box wall (6), of the box body (4), and said rear passive radiator (9) corresponds to said front passive radiator (8).

2. The television with built-in dual opposite passive radiators sound box of claim 1, **characterized in that** said front passive radiator (8) is located on one side of the front box wall (6), and the loudspeaker group installed on the other side of said front box wall (6) is disposed on one side of the front passive radiator (8); and the vibrating membrane of the loudspeaker group is disposed outwards towards the outside of the box body (4), and said front box wall (6) is parallel to the rear box wall (7) on which said rear passive radiator (9) is installed.

3. The television with built-in dual opposite passive radiators sound box of claim 1, **characterized in that** said front passive radiator (8) is located on one side of the front box wall (6), and the loudspeaker group installed on the other side of the front box wall (6) is disposed on one side of the front passive radiator (8); and said front box wall (6) on which the front passive radiator (8) is installed, is partially depressed inwards towards the box body (4), to form a front inner box wall (10), and a front side box wall (11) is located between the front inner box wall (10) and said front box wall (6).

4. The television with built-in dual opposite passive radiators sound box of claim 3, **characterized in that** said vibrating membrane of the loudspeaker group is disposed outwards towards the box body (4), and the front inner box wall (10) on which said front passive radiator (8) is located, is parallel or oblique to the front box wall (6) on which the loudspeaker group is located; and said rear box wall (7) is parallel to the front inner box wall (10).

5. The television with built-in dual opposite passive radiators sound box of claim 3, **characterized in that** said rear box wall (7) on which the rear passive radiator (9) is installed, is partially depressed inwards towards the box body (4), to form a rear inner box wall (12), and a rear side box wall (13) is located between the rear inner box wall (12) and said rear box wall (7).

6. The television with built-in dual opposite passive radiators sound box of claim 5, **characterized in that** said vibrating membrane of the loudspeaker group is disposed outwards towards the box body, the front inner box wall (10) on which said front passive radiator (8) is located, is parallel to the rear inner box wall (12) on which the rear passive radiator (9) is located, and said front inner box wall (10) and the rear inner box wall (12) correspond to each other and are identical in both shape and size; and the front inner box wall (10) is parallel to or oblique to the front box wall (6) on which said loudspeaker group is located, and said rear inner box wall (12) is parallel to or oblique to said rear box wall (7).

7. The television with built-in dual opposite passive radiators sound box of claim 1, **characterized in that** said front passive radiator (8) is installed in the middle position of the front box wall (6), loudspeaker groups are disposed oppositely on the left and right of said front passive radiator (8), i.e. a left loudspeaker group (14) and a right loudspeaker group (15) ; and the vibrating membranes of said left loudspeaker group (14) and said right loudspeaker group (15) are both disposed outwards towards the box body (4), and said front box wall (6) is parallel to the rear box wall (7) on which said rear passive radiator (9) is installed.

8. The television with built-in dual opposite passive radiators sound box of claim 1, **characterized in that** said front passive radiator (8) is installed in the middle position of the front box wall (6), loudspeaker groups are disposed oppositely on the left and right of said front passive radiator (8), i.e. a left loudspeaker group (14) and a right loudspeaker group (15); and the front box wall (6) on which the front passive radiator (8) is installed, is partially depressed inwards towards the box body (4), to form a front inner box wall (10), the left loudspeaker group (14) and the right loudspeaker group (15) are respectively installed on a left front box wall (18) and a right front box wall (19) on the left and right sides of said front inner box wall (10), a left inner side box wall (16) is located between the left side of the front inner box wall (10) and the left front box wall (18), and the right inner side box wall (17) is located between the right side of the front inner box wall (10) and the right front box wall (19).

9. The television with built-in dual opposite passive radiators sound box of claim 8, **characterized in that** said left front box wall (18) and the right front box wall (19) which identical in shape and size, are disposed symmetrically about the centerline in the width direction of the box body (4), and parallel to said front inner box wall (10) or respectively oblique to the front inner box wall (10); and said rear passive radiator (9) is located in the middle position of the whole rear box wall (7), the rear box wall (7) is parallel to the front inner box wall (10), said left front box wall (18) and the right front box wall (19) are parallel to the rear box wall or respectively oblique to the rear box wall; the horizontal cross section of said sound box is in a "concave" shape.

10. The television with built-in dual opposite passive radiators sound box of claim 8, **characterized in that** the rear box wall (7) on which said rear passive radiator (9) is installed, is partially depressed inwards towards the box body (4), to form a rear inner box wall (12), rear outer box walls (22) are located on the left and right sides of the rear inner box wall (12); a left inner rear box wall (20) is located between the left side of said rear inner box wall (12) and the left rear outer box wall (22); a right inner rear box wall (21) is located between the right side of the rear inner box wall (12) and the right rear outer box wall (22).

11. The television with built-in dual opposite passive radiators sound box of claim 10, **characterized in that** the rear outer box walls (22) on the both sides of said rear inner box wall (12) are disposed symmetrically about the centerline in the width direction of the box body (4), parallel to the rear inner box wall (12) or oblique to said rear inner box wall (12); said rear inner box wall (12) and the front inner box wall (10) are parallel and correspond to each other which identical in shape and size; the rear outer box wall (22) on the left side of the rear inner box wall (12) corresponds to the left front box wall (18), and the rear outer box wall (22) on the right side of said rear inner box wall (12) corresponds to the right front box wall (19).

12. The television with built-in dual opposite passive radiators sound box of any one of claims 1 to 11, **characterized in that** the sound boxes on left and right sides in said television (1) are both in electroacoustic in-phase connection, the sound box located on the left side in said television (1) is connected to a left channel of the television (1), and the sound box located on the right side in said television (1) is connected to a right channel of the television (1).

13. The television with built-in dual opposite passive radiators sound box of any one of claims 1 to 11, **characterized in that** said front passive radiator (8) and the rear passive radiator (9) are completely identical passive radiators ,the front passive radiator (8) and the rear passive radiator (9) are symmetrically installed, the vibrating plane of said front passive radiator (8) is parallel to that of the rear passive radiator (9), and the distance between the vibrating planes of said front passive radiator (8) and that of the rear passive radiator (9) is less than the diameter of each single loudspeaker unit of the loudspeaker groups.

14. The television with built-in dual opposite passive radiators sound box of any one of claims 1 to 11, **characterized in that** all vibrating of each loudspeaker unit of said loudspeaker groups are installed outwards towards the box bodies (4), and all the loudspeaker units are in electroacoustic in-phase connection when the loudspeaker group is composed of a plurality of loudspeaker units.
